# EUROPEAN PATENT SPECIFICATION

(11) **EP 2 911 366 B1**
(45) Date of publication and mention of the grant of the patent: **07.09.2016**
(21) Application number: 15151513.7
(22) Date of filing: 16.01.2015
(51) Int. Cl.: H04L 29/08, H04W 4/02

(54) **Wireless communication terminal for activity management**
Drahtloses Kommunikationsendgerät zur Aktivitätsverwaltung
Terminal de communication sans fil pour la gestion d'activité

(30) Priority: 23.01.2014 JP 2014010066
(43) Date of publication of application: 26.08.2015
(73) Proprietor: Knowledgesuite, Inc., Minato-ku Tokyo 108-0022 (JP)
(72) Inventor: Inaba, Yuichi, Tokyo, 108-0022 (JP)
(74) Representative: Klunker . Schmitt-Nilson . Hirsch

(56) References cited:
- US-A1- 2005 222 768
- US-A1- 2008 182 621
- US-A1- 2010 161 706
- US-A1- 2013 172 691

## Description

### BACKGROUND OF THE INVENTION

### FIELD OF THE INVENTION

The present invention relates to a wireless communication terminal for activity management for managing user activities by a management server. The present invention can be applied to, for example, management of activity of a sales person visiting a customer's home.

### DESCRIPTION OF THE PRIOR ART

As a system for managing user activities, for example, a system disclosed in Japanese Patent Laid-Open No. 2005-148930 is known.

US 2010/0161706 A1 teaches an activity monitoring server and the consideration of a user location.

US 2013/0172691 A1 teaches a heart monitoring system for a person including one or more wireless nodes.

US 2008/0182621 A1 teaches a portable communication device including a subscriber identity module card having a memory and a processor.

In the system according to the above described document, position information of a sales person is acquired using a GPS (Global Positioning System) function of a wireless communication terminal or a position information acquisition function of a PHS (Personal Handyphone System), and is sent to a sales support server via wireless communication (see paragraph [0053], FIG. 6, etc. in the document). Then, the history of the position information is compared with a schedule of the sales person to evaluate the sales activity of the sales person (see paragraphs [0055] to [0056], FIG. 7, etc. in the document).

In this way, the system according to Japanese Patent Laid-Open No. 2005-148930 performs management and evaluation of sales activities by constantly monitoring the position of a sales person using the position information.

The system according to Japanese Patent Laid-Open No. 2005-148930 employs as a technique for acquiring position information of a wireless communication terminal, a method using a GPS or a method using position information of the nearest PHS wireless base station itself as position information of the wireless communication terminal (see paragraphs [0052] to [0053], etc. in the document).

Further, as a technique for acquiring position information of a wireless communication, a technique disclosed in Japanese Patent Laid-Open No. 2012-103138 is also known. This technique achieves acquisition of highly accurate position information by combining position information obtained by GPS with position information obtained by an access point for wireless LAN, a wireless base station for mobile communication (i.e., for mobile phones) or the like, (see paragraphs [0008] to [0009] in the document).

As described above, in the system according to Japanese Patent Laid-Open No. 2005-148930, position information is constantly acquired and immediately sent to a sales support server by wireless communication.

However, for example, around a tall building or in a mountainous area, there is a place locally where wireless communication with a wireless base station cannot be performed because a building, a mountain or the like blocks radio waves. In such a place, even if position measurement is possible using GPS, position information obtained by the position measurement cannot be sent to the sales support server.

In addition, the system according to Japanese Patent Laid-Open No. 2005-148930 has a disadvantage that the electric power consumption of a wireless communication terminal is very large because position information acquisition is constantly performed.

In contract, when the method using position information of a wireless base station itself as position information of a wireless communication terminal (see Japanese Patent Laid-Open No. 2005-148930) is employed, electric power consumption can be reduced in comparison with a case where the GPS is used, and a case where a plurality of position measurement methods are combined (see Japanese Patent Laid-Open No. 2012-103138).

However, three is a case where a wireless communication terminal is several hundred to several thousand meter away from the nearest wireless base station. Because of this, in the method using position information of the wireless base station instead, the accuracy of position information is significantly degraded. Therefore, this method has a disadvantage that highly reliable management of activity of a sales person cannot be performed.

### SUMMARY OF THE INVENTION

An object of the present invention is to provide a wireless communication terminal for activity management which can perform management even if wireless communication with a wireless base station cannot be performed in a location of activity, and also can perform highly reliable management with low power consumption.
(1) To this end, a wireless communication terminal for activity management according to a first aspect of the present invention includes: a position information generating section to measure a present position, and generate position information based on a result of the measurement; an activity information generating section to generate and temporarily store activity information, the activity information including at least an activity record indicating that a predefined action has been performed, and the position information at a time when the activity record is generated; and a communication control section to, if the communication control section determines that wireless communication is available, read out and send the temporarily stored activity information to a management server, and if the communication control section determines that wireless communication is unavailable, wait until wireless communication becomes available, and then read out and send the temporarily stored activity information to the management server.
   In the wireless communication terminal for activity management according to the first aspect of the present invention, it is desirable that the position information generating section performs highly accurate position measurement in a case where the position information generating section generates position information to be included in the activity information, and performs low power consumption position measurement which is lower in accuracy and in power consumption than the highly accurate position measurement in a case where the position information generating section generates position information not to be included in the activity information.
   In the wireless communication terminal for activity management according to the first aspect of the present invention, it is desirable that the highly accurate position measurement is a hybrid position measurement which is a combination of a plurality of types of position measurement methods, and the low power consumption position measurement is single position measurement which uses only a predetermined one type of position measurement method.
   In the wireless communication terminal for activity management according to the first aspect of the present invention, a preregistered activity location is identified using the measurement result of the present position, and the identified activity location is used as the position information.
   According to the wireless communication terminal for activity management of the first aspect of the present invention, even in a state where wireless communication is unavailable, activity information can be generated, and stored temporarily until wireless communication is available. Thus, according to the wireless communication terminal for activity management of the first aspect of the present invention, even if a place where a user has performed activity is a place where wireless communication cannot be performed, precise activity information can be generated and managed.
   In the wireless communication terminal for activity management according to the first aspect of the present invention, when activity information is to be generated, highly accurate position measurement is performed, and in other cases of position measurement, position measurement is performed with low power consumption and low accuracy, so that the overall power consumption can be lowered while the accuracy of position information added to the activity information is enhanced. Thus, according to the wireless communication terminal for activity management of the first aspect of the present invention, highly reliable management is performed with low power consumption.
   In the wireless communication terminal for activity management according to the first aspect of the present invention, hybrid position measurement is used as the highly accurate position measurement, and single position measurement is used as the low power consumption position measurement, so that the overall power consumption can be sufficiently lowered while the accuracy of position information added to the activity information is sufficiently enhanced.
   In the wireless communication terminal for activity management according to the first aspect of the present invention, position information is selected from preregistered activity locations using a position measurement result, so that activity management is made easy.
(2) A wireless communication terminal for activity management according to a second aspect of the present invention includes: a position information generating section to measure a present position by selectively performing either highly accurate position measurement or low power consumption position measurement which is lower in accuracy and in power consumption than the highly accurate position measurement, and generate position information based on a result of the measurement; an activity information generating section to generate and temporarily store activity information, the activity information including at least an activity record indicating that a predefined action has been performed, and the position information at a time when the activity record is generated; and a communication control section to, if the communication control section determines that wireless communication is available, read out and send the temporarily stored activity information to a management server, and if the communication control section determines that wireless communication is unavailable, wait until wireless communication becomes available, and then read out and send the temporarily stored activity information to the management server, wherein the activity information generating section has a first mode indicating a predefined action is being performed and a second mode indicating the predefined action is not being performed, and the activity information generating section generates the activity information including the position information measured by the highly accurate position measurement when switching between the first mode and the second mode is alternately performed; and generates, at a predefined timing, the predefined activity information including the position information measured by the low power consumption position measurement except when the switching is performed.
   According to the wireless communication terminal for activity management of the second aspect of the present invention, even in a state where wireless communication is unavailable, activity information can be generated, and stored temporarily until wireless communication becomes available. Thus, according to the wireless communication terminal for activity management of the second aspect of the present invention, even if a place where a user has performed action is a place where wireless communication cannot be performed, precise activity information can be generated and managed.
   Further, in the wireless communication terminal for activity management according to the second aspect of the present invention, when switching between the first mode and the second mode is performed, highly accurate position measurement is performed, and in other cases of position measurement, position measurement is performed with low power consumption and low accuracy, so that the overall power consumption can be lowered while the accuracy of position information added to the activity information is enhanced. Thus, according to the wireless communication terminal for activity management of the second aspect of the present invention, highly reliable management is performed with low power consumption.

### BRIEF DESCRIPTION OF THE DRAWINGS

Other objects and advantages of the present invention will be described with reference to the accompanying drawings, in which:
FIG. 1 is a conceptual diagram illustrating a network configuration of an activity management system according to a first embodiment of the present invention;
FIG. 2 is a block diagram conceptually illustrating a configuration of a wireless communication terminal for activity management according to the first embodiment; and
FIG. 3 is a state transition diagram for illustrating a method to use the wireless communication terminal for activity management according to the first embodiment.

### DETAILED DESCRIPTION

Hereinafter, embodiments of the present invention will be described with reference to the drawings.

### First Embodiment

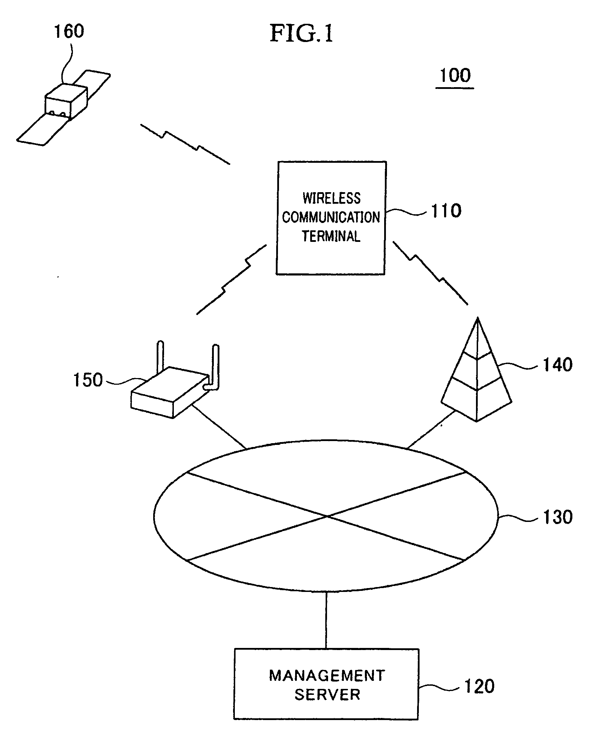

The embodiment 1 of the present invention will be described with reference to FIGS. 1 to 3, using an example where activity of a sales person visiting a customer's home is managed.

FIG. 1 is a conceptual diagram illustrating a network configuration of an activity management system according to the first embodiment.

As shown in FIG. 1, the activity management system 100 according to the first embodiment includes a wireless communication terminal for activity management (hereinafter simply referred to as a "wireless communication terminal") 110, and a management server 120.

The wireless communication terminal 110 is carried by a sales person when he/she performs activity to visit a customer's home. The wireless communication terminal 110 is communicatively connected to the Internet 130 via a wireless base station 140 for mobile communication (i.e., for mobile phones) or an access point 150 for wireless LAN (Local Area Network). Further, the wireless communication terminal 110 receives a positioning signal from a GPS (Global Positioning System) satellite 160.

The wireless communication terminal 110 generates information for managing a visit activity of a sales person (hereinafter referred to as "activity information") as described later, and sends the activity information to the management server 120. Although only one wireless communication terminal 110 is shown in FIG. 1, the activity management system 100 may include a plurality of wireless communication terminals 110.

As the wireless communication terminal 110, for example, a mobile phone, a smartphone, and a tablet terminal which can receive GPS radio waves may be used.

The management server 120 receives the activity information from the wireless communication terminal 110, and stores and manages the activity information in a database (not shown).

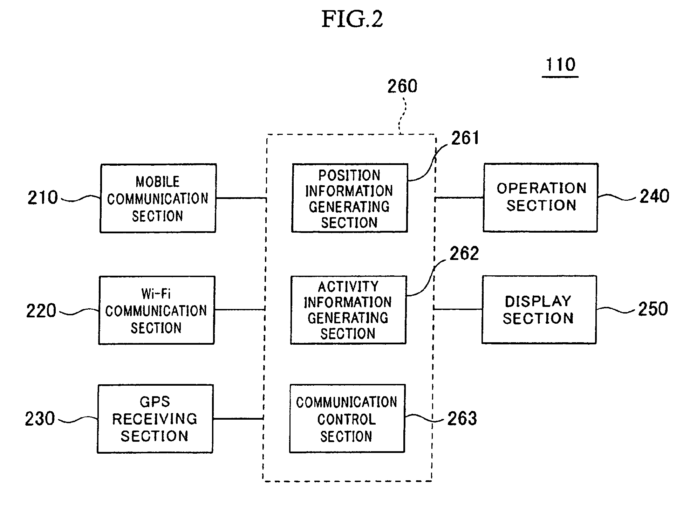

FIG. 2 is a block diagram conceptually illustrating the main configuration of the wireless communication terminal 110.

As shown in FIG. 2, the wireless communication terminal 110 includes a mobile communication section 210, a Wi-Fi communication section 220, a GPS receiving section 230, an operation section 240, a display section 250, and a processing section 260.

The mobile communication section 210 connects the wireless communication terminal 110 to the wireless base station 140 for mobile communication to perform mobile data communication. Further, the mobile communication section 210 acquires position information from the wireless base station 140 under the control of the processing section 260 (as described later). The communication method of such mobile data communication is not particularly limited, and may be 3G (3rd Generation), LTE (Long Term Evolution), or any other communication method.

The Wi-Fi communication section 220 communicatively connect the wireless communication terminal 110 with the access point 150 to perform data communication in wireless LAN mode. Further, the Wi-Fi communication section 220 acquires position information from the access point 150 under the control of the processing section 260 (as described later). The communication method of wireless LAN is not particularly limited.

The GPS receiving section 230 receives a positioning signal from the GPS satellite 160 under the control of the processing section 260 (as described later).

The operation section 240 is used when a user (sales person) operates the wireless communication terminal 110, inputs character information, or the like. Typically, operation keys, a touch panel or the like provided on the communication terminal 110 may be used as the operation section 240.

The display section 250 displays character information, a map and the like on the screen based on a signal inputted from the processing section 260 (as described later). For example, a liquid crystal display or the like may be used as the display section 250.

The processing section 260 constructs a position information generating section 261, an activity information generating section 262, and a communication control section 263 as software, by executing an application program for activity management. It is apparent that these sections 261 to 263 may be constructed as hardware.

The position information generating section 261 measures the present position, and generates position information based on this position measurement result. The position information generating section 261 can execute two types of position measurement modes.

The first position measurement mode is a highly accurate position measurement mode. Although a position measurement method used for highly accurate position measurement is not limited, the first embodiment utilizes a combination of a position measurement method using the GPS satellite 160, a position measurement method using the wireless base station 140 for mobile communication and a position measurement method using the access point 150 for wireless LAN (herein referred to as "hybrid position measurement"). As a service which performs position measurement using the combination of the above three types of position measurement methods, for example, "Standard Location Service" is known which is implemented in iOS (R), which is an operating system for mobile computing devices from Apple Inc.

In the first embodiment, this hybrid position measurement is executed when activity information is generated (as described later).

The second position measurement mode is a position measurement mode with low power consumption. Thus, a position measurement method used for the second position measurement can have a lower position measurement accuracy than that of the hybrid position measurement as long as its power consumption is less than that of the hybrid position measurement. In the first embodiment, as the position measurement method with low power consumption, a method using only the wireless base station 140 for mobile communication (herein referred to as "single position measurement") is employed. As a position measurement service using only a mobile communication base station, for example, "Significant-Change Location Service" is known which is implemented in the above described iOS (R).

In the first embodiment, this single position measurement is executed as position measurement except when activity information is generated. For example, in a case where when a user is moving, position measurement is automatically or manually performed by the wireless communication terminal 110 to display surrounding area information (for example, a list of customers' homes existing around the current location) and the like, the single position measurement is used because highly accurate position measurement is unnecessary. Also, in a case where the position of a user is monitored constantly (or at certain time intervals) in the same manner as in Japanese Patent Laid-Open No. 2005-148930, the single position measurement is used except when activity information is generated.

Geographic coordinates (for example, latitude and longitude) acquired by the hybrid position measurement and the single position measurement are outputted as "position information".

Alternatively, geographic coordinates acquired by the hybrid position measurement may be compared with geographic coordinates of preregistered activity locations (for example, an office which a user works for, and customers' homes), and if a specific activity location is thereby identified, "position information" may be determined to be the identified activity location.

Further, in a case where quasi-zenith satellites are used as the GPS satellite 160, and the like, very highly accurate position measurement can be performed with respect to altitude in addition to latitude and longitude by reception from public Wi-Fi provided on a building floor in an alternate manner. Thus, position measurement using the GPS may utilize position measurement results including altitude in addition to latitude and longitude as position information. Thereby, in a case where, for example, customers' homes are on different floors of the same building, each customer's home can be separately identified.

The activity information generating section 262 generates and temporarily stores activity information. This activity information includes an activity record, position information, and date and time information.

The activity record is a record of "predefined action" performed by a user. Although any action can be defined as a target of activity record, activity record targets in the first embodiment are "attendance", "leaving", "present location", "check-in", and "check-out".

As used herein, "Attendance" refers to an action of arriving at a user's office and starting work. "Leaving" refers to an action of finishing work for the day and leaving the office. "Present location" refers to an action of simply reporting a user's present location. "Check-in" refers to an action of starting a management target activity, and in this embodiment, an action of entering a customer's home to be visited. "Check-out" refers to an action of terminating a management target activity, and in this embodiment, an action of leaving a visited customer's home.

An activity record is generated based on an operation performed by a user (sales person) (as described later).

After the activity record is generated, the activity information generating section 262 requests the position information generating section 261 to perform the hybrid position measurement. Then, the activity information generating section 262 receives as "position information", geographic coordinates (for example, latitude and longitude) acquired by the hybrid position measurement from the position information generating section 261.

Further, the activity information generating section 262 adds date and time information at the current time and the like to the temporarily stored activity record and position information, and temporarily stores them in an internal memory (not shown) or the like as "activity information".

Further, supplementary information such as "accomplishment report of the visit" may be added to this "activity information".

The communication control section 263 determines whether wireless communication is available or unavailable by checking radio wave conditions of the mobile communication section 210 and the Wi-Fi communication section 220. Then, if determining that the wireless communication is available, the communication control section 263 reads out the temporarily stored activity information in the storing order, and causes the mobile communication section 210 or the Wi-Fi communication section 220 to send the activity information. The activity information sent from the mobile communication section 210 or the Wi-Fi communication section 220 is received by the wireless base station 140 or the access point 150, and further sent via the Internet 130 to the management server 120.

On the other hand, if determining that the wireless communication is unavailable, the communication control section 263 waits until the wireless communication becomes available. Then, when the wireless communication becomes available, the communication control section 263 reads out the temporarily stored activity information in the storing order, and causes the mobile communication section 210 or the Wi-Fi communication section 220 to send the activity information.

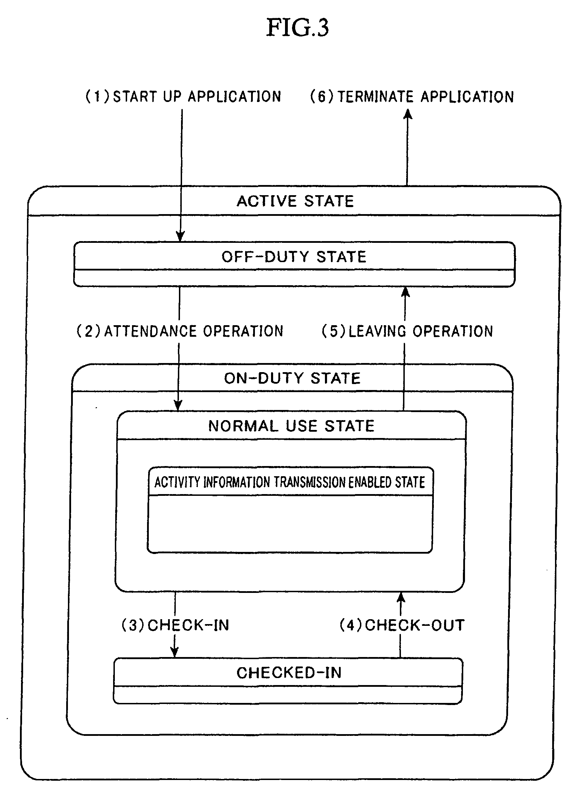

FIG. 3 is a state transition diagram for illustrating a method to use the wireless communication terminal 110.

First, a user (sales person) operates the wireless communication terminal 110 to start an application program for activity management before attending the user's office (see (1) in FIG. 3). At this time, the operation mode of the application program for activity management is set to "off-duty state". In the off-duty state, generation and transmission of activity information are not performed, and also position measurement (hybrid position measurement and single position measurement) is not performed.

Upon attending the office, the user operates the wireless communication terminal 110 to switch the mode of the application from "off-duty state" to "on-duty state" (see (2) in FIG. 3).

As shown in FIG. 3, the "on-duty state" includes "normal use state" and "checked-in" as operation modes. When the "off-duty state" is switched to the "on-duty state", the operation mode is set to the "normal use state". By switching of the operation mode to the "normal use state", generation and transmission of activity information becomes possible, and single position measurement also becomes possible.

Then, the activity information generating section 262 of the wireless communication terminal 110 will generate activity information of "attendance" as described below.

First, the activity information generating section 262 of the wireless communication terminal 110 generates an activity record of the "attendance", and requests the position information generating section 261 to generate position information.

The position information generating section 261 performs the hybrid position measurement as described above to generate the position information. Thereby, the position information can be acquired with high accuracy.

Upon receiving the position information, the activity information generating section 262 generates and temporarily stores the activity information as described above.

The communication control section 263 checks radio wave conditions of the mobile communication section 210 and the Wi-Fi communication section 220. Then, if determining that wireless communication is available, the communication control section 263 reads out the temporarily stored activity information (the activity information about the "attendance"), and causes the mobile communication section 210 or the Wi-Fi communication section 220 to send the activity information. The activity information is received by the wireless base station 140 or the access point 150, and further received by the management server 120 via the Internet 130. As a result, the management server 120 can acquire the activity information including the highly accurate position information, and therefore can perform highly reliable management of the user (sales person).

On the other hand, if determining that wireless communication is unavailable, the communication control section 263 does not send the activity information, and waits until wireless communication becomes available. Then, when the mobile communication section 210 or the Wi-Fi communication section 220 becomes able to perform wireless communication, the temporarily stored activity information (the activity information about the "attendance") is read out and sent. Thus, even if wireless communication cannot be performed due to poor radio wave conditions in the office which a user has attended, the management server 120 can acquire and manage activity information in which the user's attendance location and date/time information are precisely described. Therefore, for example, even if a user performs fraudulent manipulation to pretend as if the user has arrived at the office despite that the user has not arrived at the office, such a fraud can be seen through.

After that, the user leaves his/her office and starts moving to the first customer's home.

During this movement, the wireless communication terminal 110 can generate and transmit activity information of the "present location". Generation and transmission of activity information of the "present location" may be performed by the user itself operating the wireless communication terminal 110, performed automatically at predefined time intervals, performed according to result of the single position measurement (for example, each time the nearest mobile communication base station 140 is switched), or performed at other timing.

When the user enters the customer' s home, which is the first destination to visit, the user switches the operation mode from the "normal use state" to the "checked-in" (see (3) in FIG. 3).

In response to this, the activity information generating section 262 of the wireless communication terminal 110 generates and transmits activity information of the "check-in". The way of generating and transmitting this activity information can be the same as in the case of the activity information of the "attendance".

It is noted that while the operation mode is the "checked-in", the wireless communication terminal 110 does not perform generation and transmission of activity information.

Subsequently, when the user gets out of the first customer's home, the user switches the operation mode from the "checked-in" to the "normal use state" (see (4) in FIG. 3). In response to this, the activity information generating section 262 of the wireless communication terminal 110 generates and transmits activity information of the "check-out". The way of generating and transmitting this activity information can be the same as in the case of the activity information of the "attendance".

After that, the user sequentially visits a plurality of destinations to visit as in the same manner as the first visited destination. With respect to each of the second and later destinations to visit, the user performs an operation for switching the operation mode from the "normal use state" to the "checked-in" (see (3) in FIG. 3), and an operation for switching the operation mode from the "checked-in" to the "normal use state" (see (4) in FIG. 3). Accordingly, the wireless communication terminal 110 generates and transmits activity information of the "check-in" and activity information of the "check-out" correspondingly.

Further, also during movement between destinations to visit, the wireless communication terminal 110 can generate and transmit activity information of the "present location".

As described above, in the first embodiment, highly accurate position information can be acquired by performing the hybrid position measurement when generating activity information of the "check-in", "check-out" or "present location", and furthermore, even in a state where wireless communication is unavailable, activity information can be generated, and stored temporarily until wireless communication becomes available. Therefore, even if a user performs fraudulent manipulation to pretend as if the user has visited a customer's home despite that the user has not visited the customer's home, such a fraud can be seen through.

In addition, the position information generating section 261 of the wireless communication terminal 110 can perform the single position measurement while the user is moving between destinations to visit or the like. For example, the single position measurement may be automatically performed constantly (or at certain time intervals) to display surrounding information (for example, a list of customers existing around the current location) on the display section 250. In addition, such surrounding information may be displayed based on an operation performed by a user. Further, in a case where the position of a user is monitored constantly (or at certain time intervals) in the same manner as in Japanese Patent Laid-Open No. 2005-148930, the single position measurement can be used except when activity information is generated. In this way, the single position measurement is performed for position measurement except when activity information is generated (that is, position measurement which does not require high accuracy), so that the overall power consumption can be lowered.

When the user finishes work for the day, the user operates the wireless communication terminal 110 to switch the mode of the application program for activity management from the "on-duty state" to the "off-duty state" (see (5) in FIG. 3). By this mode switching, generation and transmission of activity information, and the single position measurement are not performed anymore.

Then, the user operates the wireless communication terminal 110 to terminate the application program for activity management (see (6) in FIG. 3).

As described above, according to the first embodiment, even in a state where wireless communication is unavailable, activity information can be generated, and stored temporarily until wireless communication becomes available. Thus, according to the first embodiment, even if a place where a user has performed activity is a place where wireless communication cannot be performed, precise activity information can be generated and managed.

Further, according to the first embodiment, when activity information is to be generated, highly accurate position measurement is performed, and in other cases, position measurement is performed with low power consumption, so that the overall power consumption can be lowered while the accuracy of position information added to the activity information is enhanced. Thus, according to the first embodiment, highly reliable management is performed with low power consumption.

Further, according to the first embodiment, hybrid position measurement is used as the highly accurate position measurement, and single position measurement is used as the low power consumption position measurement, so that the overall power consumption can be sufficiently lowered while the accuracy of position information added to the activity information is sufficiently enhanced.

In addition, according to the first embodiment, position information can be selected from preregistered activity locations using a position measurement result, so that activity management is made easy.

## Claims

1. A wireless communication terminal (110) for activity management, comprising:
a position information generating section (261) to measure a present position, and generate position information based on a result of the measurement;
an activity information generating section (262) to generate and temporarily store activity information, the activity information including at least an activity record indicating that a predefined action has been performed, and the position information at a time when the activity record is generated; and
a communication control section (263) to, if the communication control section (263) determines that wireless communication is available, read out and send the temporarily stored activity information to a management server (120), and if the communication control section (263) determines that wireless communication is unavailable, wait until wireless communication becomes available, and then read out and send the temporarily stored activity information to the management server, **characterized in that** measuring the present position is performed by selectively performing either highly accurate position measurement or low power consumption position measurement which is lower in accuracy and in power consumption than the highly accurate position measurement, wherein the activity information generating section (262) has a first mode indicating a predefined action is being performed and a second mode indicating the predefined action is not being performed, and
the activity information generating section (262) generates the activity information including the position information measured by the highly accurate position measurement when switching between the first mode and the second mode is alternately performed; and generates, at a predefined timing, the predefined activity information including the position information measured by the low power consumption position measurement except when the switching is performed.

2. The wireless communication terminal (110) for activity management according to claim 1, **characterized in that** the position information generating section (261) performs highly accurate position measurement in a case where the position information generating section (261) generates position information to be included in the activity information, and performs low power consumption position measurement which is lower in accuracy and in power consumption than the highly accurate position measurement in a case where the position information generating section (261) generates position information not to be included in the activity information.

3. The wireless communication terminal (110) for activity management according to claim 2, **characterized in that** the highly accurate position measurement is a hybrid position measurement which is a combination of a plurality of types of position measurement methods, and the low power consumption position measurement is single position measurement which uses only a predetermined one type of position measurement method.

4. The wireless communication terminal (110) for activity management according to claim 1, **characterized in that** the position information generating section identifies a preregistered activity location using the measurement result of the present position, and uses the identified activity location as the position information.

## Patentansprüche

1. Drahtlose Kommunikationsendstelle (110) zur Aktivitätsverwaltung, aufweisend:
eine Positionsinformationsgenerierungseinheit (261) zum Messen einer derzeitigen Position, und zum Generieren von Positionsinformation basierend auf ei nem Ergebnis des Messens;
eine Aktivitätsinformationsgenerierungseinheit (262) zum Generieren und temporären Abspeichern von Aktivitätsinformation, die Aktivitätsinformation aufweisend mindestens eine Aktivitätsaufzeichnung anzeigend, dass eine vorbestimmte Aktion ausgeführt wurde, und der Positionsinformation zu dem Zeitpunkt an dem die Aktivitätsaufzeichnung generiert ist; und
eine Kommunikationssteuerungseinheit (263) zum, falls die Kommunikationssteuerungseinheit (263) ermittelt, dass drahtlose Kommunikation verfügbar ist, Auslesen und Senden der temporär gespeicherten Aktivitätsinformation an einen Managementserver (120), und, falls die Kommunikationssteuerungseinheit (263) ermittelt, dass drahtlose Kommunikation nicht verfügbar ist, Warten bis eine drahtlose Kommunikation verfügbar ist, und dann Auslesen und Senden der temporär gespeicherten Aktivitätsinformation an den Managementserver, **dadurch gekennzeichnet, dass** das Messen der derzeitigen Position mittels Ausführens von entweder hoch akkurater Positionsmessung oder Niedrigenergieverbrauchpositionenmessung, was niedriger in der Akkuranz und im Stromverbrauch ist als die hoch akkurate Positionsmessung, wobei die Aktivitätsinformationsgenerierungseinheit (262) einen ersten Modus hat, der anzeigt, dass eine vorbestimmte Aktion durchgeführt ist und einen zweiten Modus, der anzeigt, dass die vorbestimmte Aktion nicht durchgeführt ist, und
die Aktivitätsinformationsgenerierungseinheit (262) generiert die Aktivitätsinformation aufweisend die Positionsinformation gemessen mittels hoch akkurater Positionsmessung, wenn ein Umschalten zwischen dem ersten Modus und dem zweiten Modus durchgeführt wird; und generiert, zu einem vorbestimmten Zeit punkt, die vorbestimmte Aktivitätsinformation aufweisend die Positionsinformation gemessen mittels der Niedrigenergieverbrauchpositionsmessung, außer wenn das Umschalten ausgeführt wird.

2. Drahtlose Kommunikationsendstelle (110) zur Aktivitätsverwaltung gemäßAnspruch 1, **dadurch gekennzeichnet, dass** die Positionsinformationsgenerierungseinheit (261) hoch akkurate Positionsmessungen in einem Fall ausführt, wo die Positionsinformationsgenerierungseinheit (261) Positionsinformation generiert, welche in der Aktivitätsinformation inkludiert sein soll, und führt Niedrigenergieverbrauchpositionsmessungen durch, die niedriger in der Akkuranz und im Stromver brauch ist als die Hochakkuranzpositionsmessung in einem Fall, wo die Positionsinformationsgenerierungseinheit (261) Positionsinformation generiert, welche nicht in die Aktivitätsinformation inkludiert werden soll.

3. Drahtlose Kommunikationsendstelle (110) zur Aktivitätsverwaltung gemäß Anspruch 2, **dadurch gekennzeichnet, dass** die Hochakkuratspositionsmessung eine hybride Positionsmessung ist, was eine Kombination aus einer Mehrzahl von Typen von Positionsmessungsmethoden ist, und die Niedrigenergieverbrauchpositionsmessung eine einzelne Positionsmessung ist, welche lediglich einen vorbestimmten Typ von Positionsmessungsverfahren verwendet.

4. Drahtlose Kommunikationsendstelle (110) zur Aktivitätsverwaltung gemäß Anspruch 1, **dadurch gekennzeichnet, dass** die Positionsinformationsgenerierungseinheit einen vorregistrierten Aktivitätsort unter Verwendung der Messergebnisse der vorherigen Position identifiziert und den identifizierten Aktivitätsort als die Positionsinformation verwendet.

## Revendications

1. Terminal de communication sans fil (110) destiné à la gestion d'activité, comprenant :
une section de génération d'informations de position (261) destinée à mesurer une position actuelle, et à générer des informations de position sur la base d'un résultat de la mesure ;
une section de génération d'informations d'activité (262) destinée à générer et stocker temporairement des informations d'activité, les informations d'activité incluant au moins un enregistrement d'activité indiquant qu'une action prédéfinie a été exécutée, et les informations de position à un temps où l'enregistrement d'activité est généré, et
une section de commande de communication (263) destinée à lire et envoyer les informations d'activité stockées temporairement, si la section de commande de communication (263) détermine qu'une communication sans fil est disponible, à un serveur de gestion (120) et si la section de commande de communication (263) détermine qu'une communication sans fil n'est pas disponible, à attendre jusqu'à ce que la communication sans fil devienne disponible, puis à lire et envoyer les informations d'activité stockées temporairement au serveur de gestion,
**caractérisé en ce que** la mesure de la position actuelle est exécutée en exécutant de manière sélective soit une mesure de position de haute précision, soit une mesure de position de faible consommation d'énergie qui présente une précision et une consommation d'énergie inférieures à celles de la mesure de position de haute précision,
dans lequel la section de génération d'informations d'activité (262) présente un premier mode indiquant qu'une action prédéfinie est en cours d'exécution et un second mode indiquant que l'action prédéfinie n'est pas en cours d'exécution, et
la section de génération d'informations d'activité (262) génère les informations d'activité incluant les informations de position mesurées par la mesure de position de haute précision lorsque l'on exécute un changement de mode entre le premier mode et le second mode par alternance, et génère, à une temporisation prédéfinie, les informations d'activité prédéfinies incluant les informations de position mesurées par la mesure de position de faible consommation d'énergie, excepté lors de l'exécution du changement de mode.

2. Terminal de communication sans fil (110) destiné à la gestion d'activité selon la revendication 1, **caractérisé en ce que** la section de génération d'informations de position (261) exécute une mesure de position de haute précision dans un cas où la section de génération d'informations de position (261) génère des informations de position à inclure dans les informations d'activité, et exécute une mesure de position de faible consommation d'énergie qui présente une précision et une consommation d'énergie inférieures à celles de la mesure de position de haute précision dans un cas où la section de génération d'informations de position (261) génère des informations de position à ne pas inclure dans les informations d'activité.

3. Terminal de communication sans fil (110) destiné à la gestion d'activité selon la revendication 2, **caractérisé en ce que** la mesure de position de haute précision est une mesure de position hybride, qui est une combinaison d'une pluralité de types de procédés de mesure de position, et la mesure de position de faible consommation d'énergie est une mesure de position unique qui n'utilise qu'un type prédéterminé de procédé de mesure de position.

4. Terminal de communication sans fil (110) destiné à la gestion d'activité selon la revendication 1, **caractérisé en ce que** la section de génération d'informations de position identifie une localisation d'activité préenregistrée à l'aide du résultat de mesure de la position actuelle, et utilise la localisation d'activité identifiée comme informations de position.
